# EUROPEAN PATENT APPLICATION

(11) **EP 4 768 871 A1**
(43) Date of publication of application: **01.07.2026**
(21) Application number: 25224582.4
(22) Date of filing: 17.12.2025
(51) Int. Cl.: G01G 19/393, G01G 3/14

(54) **COMBINATION WEIGHING APPARATUS**

(30) Priority: 25.12.2024 JP 2024228675
(71) Applicant: Ishida Co., Ltd., Kyoto-shi Kyoto 606-8392 (JP)
(72) Inventor: KAGEYAMA, Toshiharu, Ritto-shi, Shiga, 520-3026 (JP); MORISHITA, Yukio, Ritto-shi, Shiga, 520-3026 (JP)
(74) Representative: Gill Jennings & Every LLP

(57) **Abstract**

A combination weighing apparatus includes a first stepping motor 51, which has a heat emitting surface HS, and a load cell 90. The load cell 90 has a strain element 90a and an electrical circuit including a first temperature-sensitive resistor R1. The strain element 90a has a first thin portion TH1 to which a first strain gauge 1G1 is attached, a second thin portion TH2 to which a second strain gauge 2G1 is attached, and a first central portion C1 disposed between them. The first central portion C1 has a first surface C1A that opposes the heat emitting surface HS of the first stepping motor 51 and a second surface C1B that does not oppose the heat emitting surface HS. The first temperature-sensitive resistor R1 is secured to the second surface C1B.

## Description

### BACKGROUND

### TECHNICAL FIELD

This invention relates to a combination weighing apparatus including load cells.

### RELATED ART

Conventionally, since the Young's modulus of a strain element changes with temperature, there have been load cells that use a resistor to perform temperature correction. For example, patent document 1 (JP-A No. H11-125555) discloses a load cell that incorporates a temperature-sensitive resistor for temperature correction into an electrical circuit.

### SUMMARY

### TECHNICAL PROBLEM

However, when a load cell is used in a combination weighing apparatus, there is the risk that temperature correction may not be properly performed depending on other parts surrounding the load cell and the surrounding environment, thus reducing the weighing accuracy of the combination weighing apparatus.

It is a problem of this invention to ensure the weighing accuracy of a combination weighing apparatus.

### SOLUTION TO PROBLEM

A combination weighing apparatus pertaining to a first aspect includes a plurality of hoppers, a first drive unit, and a load cell. The plural hoppers include a first hopper that discharges product retained therein. The plural hoppers each have a discharge unit. The first drive unit has a first heat emitting portion. The first drive unit drives the discharge unit. The load cell is secured to the first hopper. The load cell is used for weighing the product retained in the first hopper. The load cell has a strain element, a first strain gauge, a second strain gauge, and an electrical circuit. The strain element has a first end portion secured to the first hopper, a second end portion that is an end portion on the opposite side of the first end portion, a first thin portion and a second thin portion, and a first central portion. The first thin portion and the second thin portion are disposed between the first end portion and the second end portion. The first central portion is disposed between the first thin portion and the second thin portion. The first strain gauge is attached to the first thin portion. The second strain gauge is attached to the second thin portion. The electrical circuit includes a first temperature-sensitive resistor. The electrical circuit converts a change in the resistance of the first strain gauge and the second strain gauge to a voltage. The first central portion has a first surface that opposes the first heat emitting portion of the first drive unit and a second surface that does not oppose the first heat emitting portion of the first drive unit. The first temperature-sensitive resistor is secured to the second surface of the first central portion.

In this combination weighing apparatus, the first temperature-sensitive resistor of the load cell is secured not to the first surface that opposes the first heat emitting portion of the first drive unit but to the second surface that does not oppose the first heat emitting portion of the first drive unit. For this reason, in the combination weighing apparatus pertaining to the first aspect, the first temperature-sensitive resistor is inhibited from being affected by the radiant heat of the first heat emitting portion, the weighing results obtained by the load cell are good, and the weighing accuracy of the combination weighing apparatus can be ensured.

A combination weighing apparatus pertaining to a second aspect is the combination weighing apparatus of the first aspect, wherein the second surface of the first central portion is a surface on the opposite side of the first surface of the first central portion and is parallel to the first surface of the first central portion.

Here, the first temperature-sensitive resistor is secured to the second surface on the opposite side of the first surface that opposes the first heat emitting portion of the first drive unit, so the first temperature-sensitive resistor is not affected at all or is hardly affected by the radiant heat of the first heat emitting portion.

A combination weighing apparatus pertaining to a third aspect is the combination weighing apparatus of the first aspect, wherein the second surface of the first central portion is a surface on the opposite side of the first surface of the first central portion and is not parallel to the first surface of the first central portion.

Here, the first temperature-sensitive resistor is secured to the second surface on the opposite side of the first surface that opposes the first heat emitting portion of the first drive unit, so the first temperature-sensitive resistor is not affected at all or is hardly affected by the radiant heat of the first heat emitting portion.

A combination weighing apparatus pertaining to a fourth aspect is the combination weighing apparatus of the first aspect, wherein the second surface of the first central portion is an inner surface of a hole formed in the first central portion or one surface of a cutout formed in the first central portion.

Here, the hole or cutout is formed in the first central portion to create the second surface that does not oppose the first heat emitting portion of the first drive unit, and the first temperature-sensitive resistor is secured to the second surface. For this reason, by adjusting the disposition and size of the hole or cutout, the effect that the radiant heat of the first heat emitting portion has on the first temperature-sensitive resistor can be further reduced.

A combination weighing apparatus pertaining to a fifth aspect is the combination weighing apparatus of the first aspect, further including a second drive unit. The second drive unit has a second heat emitting portion. The second drive unit drives a discharge unit different from the discharge unit driven by the first drive unit. The strain element further has a third thin portion and a fourth thin portion and a second central portion. The third thin portion and the fourth thin portion are disposed between the first end portion and the second end portion. The second central portion is disposed between the third thin portion and the fourth thin portion. The load cell further has a third strain gauge attached to the third thin portion and a fourth strain gauge attached to the fourth thin portion. The electrical circuit further includes a second temperature-sensitive resistor. In the electrical circuit, the first strain gauge, the second strain gauge, the third strain gauge, and the fourth strain gauge are disposed in a bridge configuration. The second central portion has a third surface that opposes the second heat emitting portion of the second drive unit and a fourth surface that does not oppose the second heat emitting portion of the second drive unit. The second temperature-sensitive resistor is secured to the fourth surface of the second central portion.

In this combination weighing apparatus, the second temperature-sensitive resistor of the load cell is secured not to the third surface that opposes the second heat emitting portion of the second drive unit but to the fourth surface that does not oppose the second heat emitting portion of the second drive unit. For this reason, in the combination weighing apparatus pertaining to the fifth aspect, the second temperature-sensitive resistor is inhibited from being affected by the radiant heat of the second heat emitting portion, the weighing results obtained by the load cell are good, and the weighing accuracy of the combination weighing apparatus can be ensured.

A combination weighing apparatus pertaining to a sixth aspect is the combination weighing apparatus of the fifth aspect, wherein the plurality of hoppers further include a second hopper. The second hopper is positioned above or under the first hopper. The first drive unit drives the discharge unit of the first hopper. The second drive unit drives the discharge unit of the second hopper. The load cell is disposed in a height position between the first drive unit and the second drive unit.

In this combination weighing apparatus, the first hopper and the second hopper are adjacent to each other in the up and down direction, and the load cell is positioned between the first drive unit and the second drive unit that drive them. For this reason, if the first temperature-sensitive resistor and the second temperature-sensitive resistor were secured to the strain element of the load cell in the conventional way, the risk is high that the radiant heat of the first heat emitting portion of the first drive unit and the second heat emitting portion of the second drive unit will adversely affect the first temperature-sensitive resistor and the second temperature-sensitive resistor. However, here, the first temperature-sensitive resistor is secured to the second surface of the first central portion, and the second temperature-sensitive resistor is secured to the fourth surface of the second central portion, so adverse effects on the first temperature-sensitive resistor and the second temperature-sensitive resistor can be inhibited.

A combination weighing apparatus pertaining to a seventh aspect is the combination weighing apparatus of any of the first aspect to the sixth aspect, wherein the first drive unit and the load cell overlap each other as viewed from above. The first drive unit, the load cell, and the first hopper form an assembly. In the combination weighing apparatus pertaining to the seventh aspect, a plurality of the assemblies are adjacent to each other in a circumferential direction.

Here, the assemblies including the first drive units, the load cells, and the first hoppers are adjacent to each other in the circumferential direction, and in order to downsize the combination weighing apparatus, it is necessary to reduce the size of the assemblies and/or the distance between them in the circumferential direction. In this combination weighing apparatus, even if the load cell is not separated from the first drive unit of the assembly, or even if the load cell is not separated from the first drive unit of an adjacent assembly, adverse effects on the first temperature-sensitive resistor and the second temperature-sensitive resistor can be inhibited, so it becomes easy to downsize the combination weighing apparatus.

A combination weighing apparatus pertaining to an eighth aspect is the combination weighing apparatus of any of the first aspect to the seventh aspect, wherein the first central portion of the strain element overlaps the first heat emitting portion of the first drive unit as viewed from above.

A combination weighing apparatus pertaining to a ninth aspect is the combination weighing apparatus of any of the first aspect to the eighth aspect, wherein the first surface of the first central portion of the strain element opposes the first heat emitting portion of the first drive unit without an intervening shield.

### ADVANTAGEOUS EFFECTS OF INVENTION

According to this invention, the first temperature-sensitive resistor is inhibited from being affected by the radiant heat of the first heat emitting portion, the weighing results obtained by the load cell are good, and the weighing accuracy of the combination weighing apparatus can be ensured.

### BRIEF DESCRIPTION OF THE DRAWINGS

FIG. 1 is a layout diagram of parts of a combination weighing apparatus pertaining to an embodiment of the invention as viewed from the side;
FIG. 2 is a block diagram of the combination weighing apparatus;
FIG. 3 is a perspective view of the combination weighing apparatus, with illustration of a product feed chute being omitted, showing a state in which some radial feeders, pool hoppers, and weigh hoppers are detached;
FIG. 4 is a drawing showing the arrangement of a load cell and stepping motors above and under the load cell;
FIG. 5 is a drawing showing an electrical circuit of the load cell;
FIG. 6 is a drawing showing, as viewed from the side, the arrangement of strain gauges and temperature-sensitive resistors attached to the load cell;
FIG. 7 is a drawing showing, as viewed from above, the arrangement of strain gauges and a temperature-sensitive resistor attached to the load cell;
FIG. 8 is a drawing showing the disposition of a temperature-sensitive resistor in the load cell of the combination weighing apparatus pertaining to example modification A; and
FIG. 9 is a drawing showing the disposition of a temperature-sensitive resistor in the load cell of the combination weighing apparatus pertaining to example modification B.

### DETAILED DESCRIPTION

A combination weighing apparatus 10 pertaining to an embodiment of this invention will now be described with reference to the drawings. It will be noted that the embodiment described below is a specific example of the invention and is not intended to limit the technical scope of the invention.

### (1) Overall Configuration of Combination Weighing Apparatus

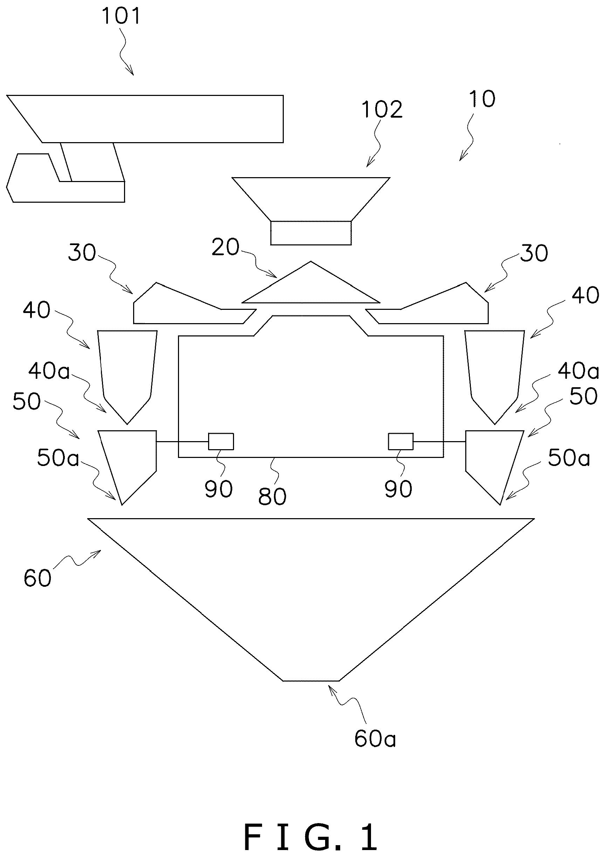

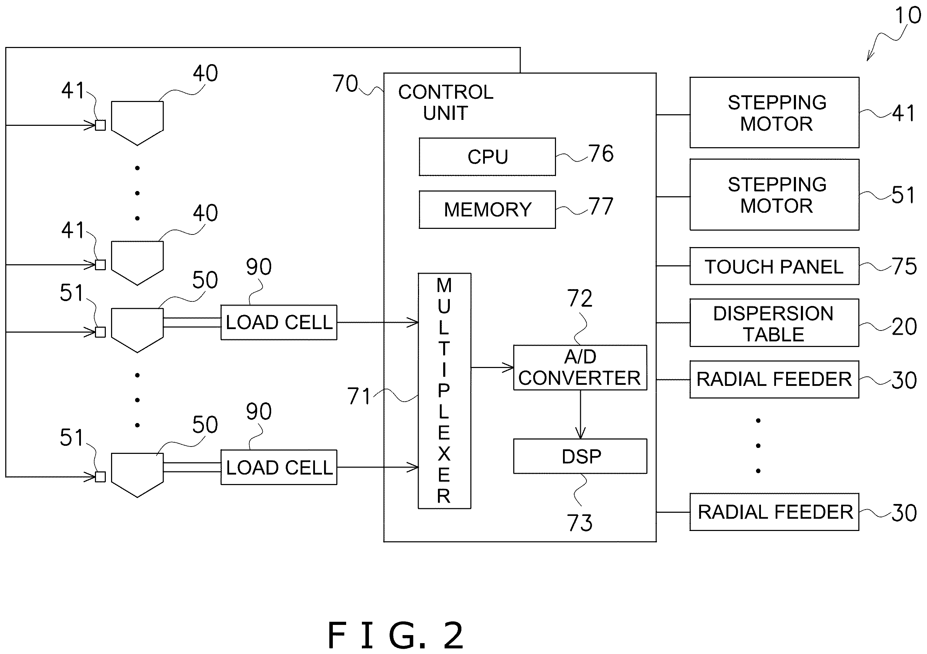

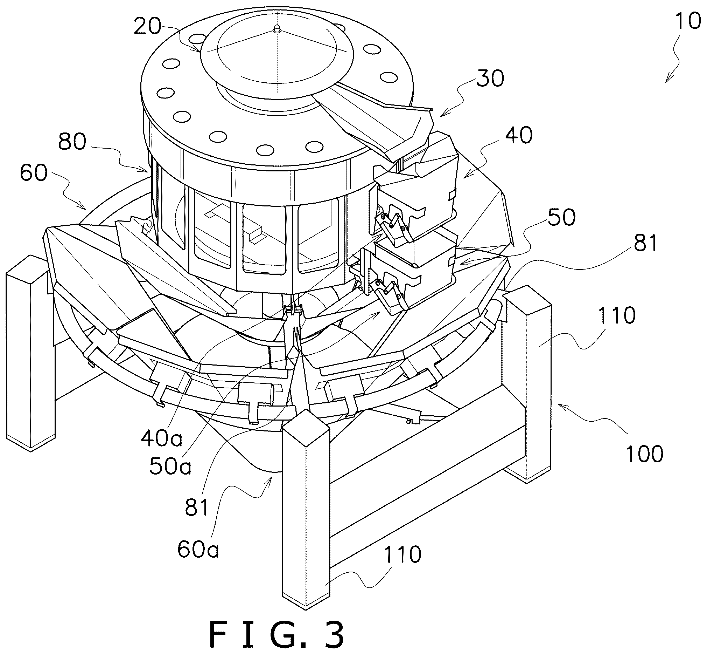

FIG. 1 is a schematic side view of the combination weighing apparatus 10 pertaining to the embodiment of the invention. FIG. 2 is a block diagram of the combination weighing apparatus 10. FIG. 3 is a perspective view of the combination weighing apparatus 10. It will be noted that FIG. 3 omits illustration of a product feed chute 102 described below. Furthermore, FIG. 3 illustrates a state in which some radial feeders 30, pool hoppers 40, and weigh hoppers 50 described below are detached.

As shown in FIG. 1, the combination weighing apparatus 10 mainly includes a product feed chute 102, a dispersion table 20, a plurality of radial feeders 30, a plurality of pool hoppers 40, a plurality of weigh hoppers 50, stepping motors 41, 51 (see FIG. 2) that drive the hoppers 40, 50, load cells 90 for weighing product retained in the weigh hoppers 50, a collection and discharge chute 60, a weighing mechanism frame 80, support legs 81 (see FIG. 3), a body frame 100 (see FIG. 3), and a control unit 70 (see FIG. 2).

The combination weighing apparatus 10 roughly functions as follows.

Product serving as objects to be weighed by the combination weighing apparatus 10 is conveyed to the combination weighing apparatus 10 by a cross feeder 101 (see FIG. 1) that is a separate apparatus upstream. The product conveyed by the cross feeder 101 is input to the product feed chute 102. The product input to the product feed chute 102 is fed to the dispersion table 20. The dispersion table 20 conveys, while dispersing, the product and feeds the product to the plural radial feeders 30 arranged around the dispersion table 20. The radial feeders 30 convey, to the pool hoppers 40 provided in correspondence to the radial feeders 30, the product fed from the dispersion table 20 and feed it to the pool hoppers 40. The product fed to the pool hoppers 40 is delivered to the weigh hoppers 50 disposed under the pool hoppers 40. The control unit 70 performs a combination weighing operation based on weigh values of the load cells 90 (weigh values of the product in the weigh hoppers 50) and selects a product combination with which the result of the combination weighing operation is within a predetermined tolerance range and comes closest to a target value. The product in the weigh hoppers 50 included in the selected combination is discharged to the collection and discharge chute 60. The product discharged to the collection and discharge chute 60 is fed to, for example, a bagmaking and packaging machine installed downstream (under) the combination weighing apparatus 10.

### (2) Detailed Configuration of Combination Weighing Apparatus

### (2-1) Product Feed Chute

The product feed chute 102 is disposed under the end portion of the cross feeder 101 that inputs the product to the product feed chute 102. The product feed chute 102 receives a supply of the product conveyed by the cross feeder 101 and feeds the product to the dispersion table 20.

### (2-2) Dispersion Table

The dispersion table 20 is a table-like member formed in a conical shape. The dispersion table 20 is vibrated by an electromagnet (not shown in the drawings) to disperse in its circumferential direction and convey radially outward the product fed thereto. The product conveyed to the outer edge of the dispersion table 20 is fed to the plural radial feeders 30 disposed under the outer edge side of the dispersion table 20.

### (2-3) Radial Feeders

The combination weighing apparatus 10 has a plurality (here, fourteen) of the radial feeders 30 (see FIG. 1). The plural radial feeders 30 are arranged in a ring around the dispersion table 20. The plural radial feeders 30 extend radially about the dispersion table 20. The radial feeders 30 are vibrated by electromagnets (not shown in the drawings) to convey radially outward the product fed from the dispersion table 20. The product conveyed to the outer edges of the radial feeders 30 is fed to the pool hoppers 40 disposed under the outer edge sides of the radial feeders 30.

### (2-4) Pool Hoppers

The combination weighing apparatus 10 has the same number of pool hoppers 40 as the radial feeders 30. One pool hopper 40 is disposed under the outer edge side of each radial feeder 30. The pool hoppers 40 temporarily retain the product fed from the radial feeders 30 disposed above them.

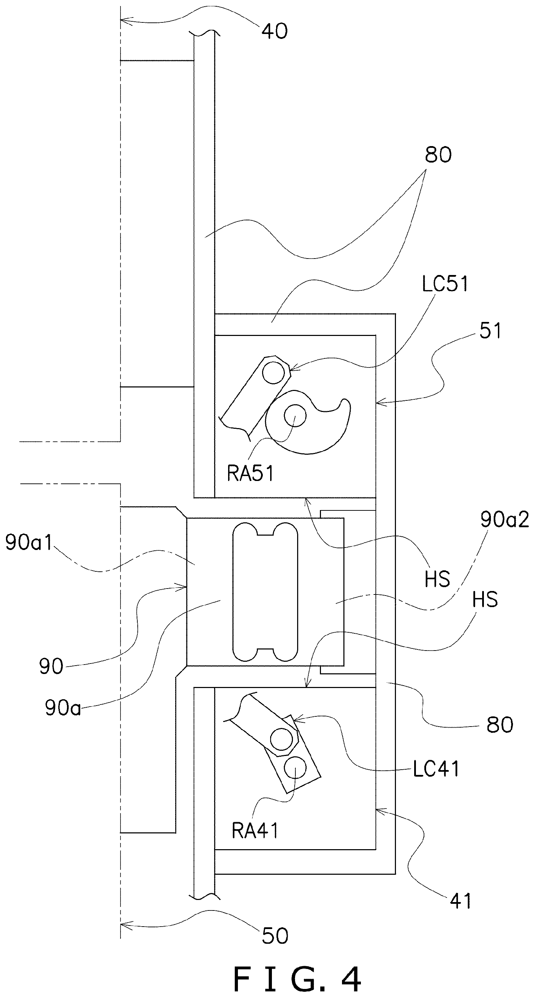

The pool hoppers 40 each have a PH gate 40a in their lower portions (see FIG. 3). When the PH gates 40a are opened, the product in the pool hoppers 40 is fed to the weigh hoppers 50 disposed under the pool hoppers 40. Each PH gate 40a is opened and closed as a result of a link mechanism LC41 being activated by a stepping motor 41 (see FIG. 2 and FIG. 4). Rotation of a rotating shaft RA41 of the stepping motor 41, i.e., the opening and closing of the PH gate 40a, is controlled by the control unit 70.

### (2-5) Weigh Hoppers

The combination weighing apparatus 10 has the same number of weigh hoppers 50 as the pool hoppers 40. One weigh hopper 50 is disposed under each pool hopper 40. The weigh hoppers 50 measure the weight of the product fed from the pool hoppers 40, i.e., the weight of the product fed from the radial feeders 30 via the pool hoppers 40.

The weigh hoppers 50 each have a WH gate 50a in their lower portions. When the WH gates 50a are opened, the product in the weigh hoppers 50 is fed to the collection and discharge chute 60. That is, the WH gates 50a function as discharge units of the weigh hoppers 50. Each WH gate 50a is opened and closed as a result of a link mechanism LC51 including a cam and a cam follower being activated by a stepping motor 51 serving as a drive unit (see FIG. 2). Rotation of a rotating shaft RA51 of the stepping motor 51, i.e., the opening and closing of the WH gate 50a, is controlled by the control unit 70.

Each weigh hopper 50 forms a set with the pool hopper 40 positioned above it. That is, the weigh hoppers 50 are disposed adjacent in the up and down direction to the pool hoppers 40 with which they form a set.

### (2-6) Stepping Motors

The stepping motors 41 that drive the PH gates 40a and the stepping motors 51 that drive the WH gates 50a are motors having the same structure. Here, the structure will be described using the stepping motors 51 as an example.

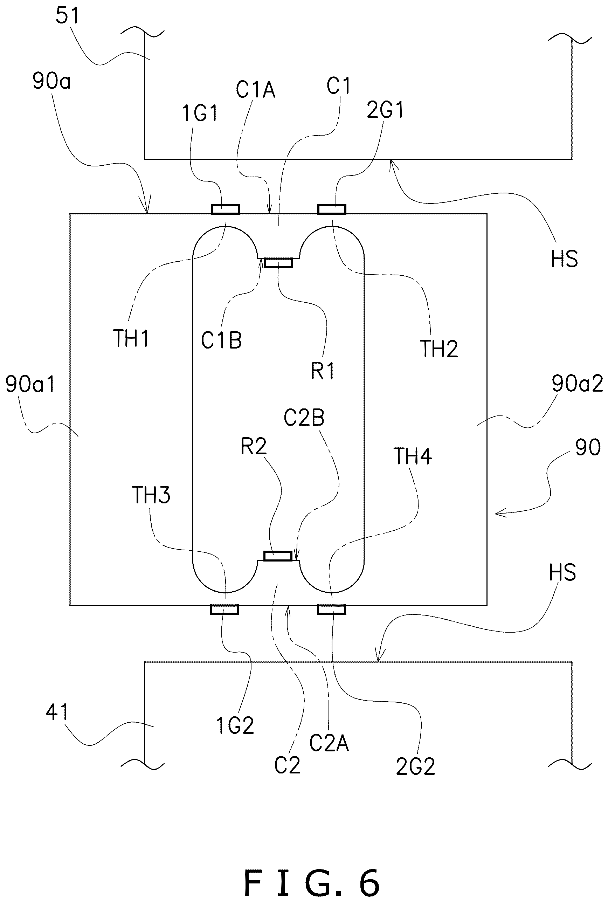

Each stepping motor 51 is an electric motor that rotates a rotating shaft RA51 shown in FIG. 4 and has a built-in coil that generates heat. For this reason, the casing of the stepping motor 51 is a heat emitting surface HS. Consequently, the lower surface of the stepping motor 51 shown in FIG. 4 and FIG. 6 is also a heat emitting surface HS. In other words, each stepping motor 51 has a lower surface that is a heat emitting surface HS. As shown in FIG. 6, the heat emitting surface HS of the stepping motor 51 and an upper surface of a strain element 90a of the load cell 90 are in close proximity to each other and oppose each other.

### (2-7) Load Cell

### (2-7-1) Outline of Load Cell

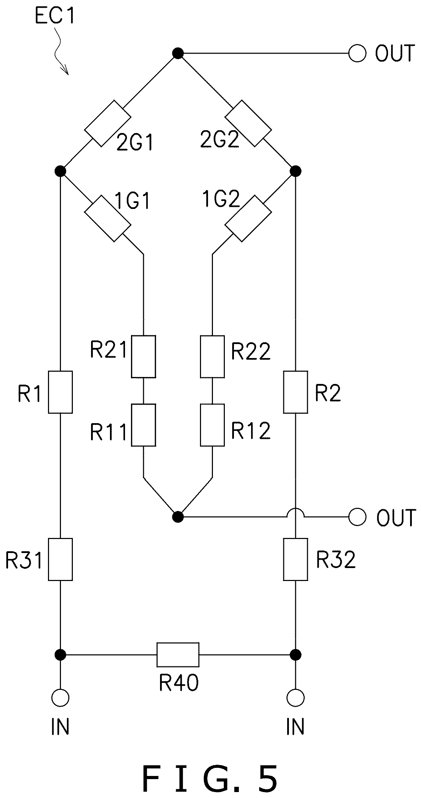

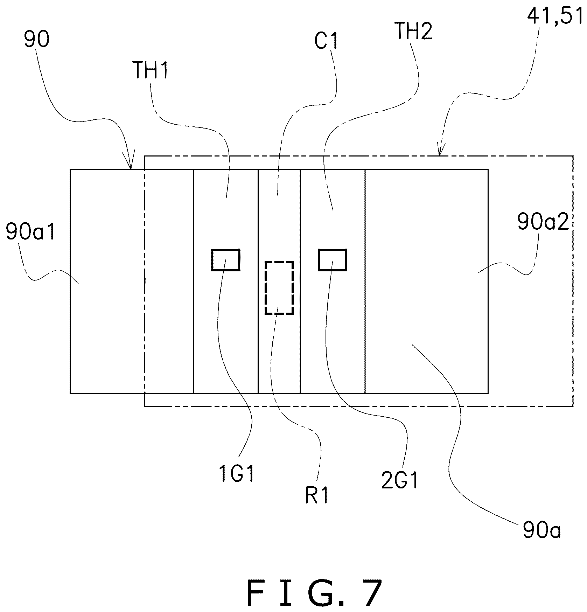

For each of the weigh hoppers 50, a load cell 90 for weighing the product held in the weigh hopper 50 is provided (see FIG. 2). FIG. 4 shows the disposition of the load cell 90, FIG. 5 shows an electrical circuit EC1 of the load cell 90, and FIG. 6 and FIG. 7 show the detailed configuration of the load cell 90.

The load cell 90 is secured to the weigh hopper 50 and is used for weighing the product held in the weigh hopper 50. The weighing result of the load cell 90 is sent as a weigh signal via an amplifier (not shown in the drawings) to a multiplexer 71 of the control unit 70 described below (see FIG. 2).

As shown in FIG. 4, the load cell 90 is positioned under the stepping motor 51 that drives the WH gate 50a of the weigh hopper 50. Furthermore, the load cell 90 is positioned above the stepping motor 41 that drives the PH gate 40a of the pool hopper 40. That is, the load cell 90 is disposed in a height position between the stepping motor 41 and the stepping motor 51. As shown in FIG. 7, as viewed from above, the stepping motor 41 and the stepping motor 51 overlap a first central portion C1 and a second central portion C2 of a strain element 90a of the load cell 90.

As shown in FIG. 6 and FIG. 7, the load cell 90 has a first strain gauge 1G1, a second strain gauge 2G1, a third strain gauge 1G2, a fourth strain gauge 2G2, a first temperature-sensitive resistor R1, a second temperature-sensitive resistor R2, an electrical circuit EC1 that includes these (FIG. 5), and a strain element 90a.

The strain element 90a has a first end portion 90a1 secured to the weigh hopper 50, a second end portion 90a2 that is an end portion on the opposite side of the first end portion 90a1, a first thin portion TH1 and a second thin portion TH2, a first central portion C1, a third thin portion TH3 and a fourth thin portion TH4, and a second central portion C2. The first thin portion TH1 and the second thin portion TH2 are disposed in the upper portion of the strain element 90a between the first end portion 90a1 and the second end portion 90a2. The first central portion C1 is disposed between the first thin portion TH1 and the second thin portion TH2. The third thin portion TH3 and the fourth thin portion TH4 are disposed in the lower portion of the strain element 90a between the first end portion 90a1 and the second end portion 90a2. The second central portion C2 is disposed between the third thin portion TH3 and the fourth thin portion TH4. The first strain gauge 1G1 is attached to the upper surface of the first thin portion TH1. The second strain gauge 2G1 is attached to the upper surface of the second thin portion TH2. The third strain gauge 1G2 is attached to the lower surface of the third thin portion TH3. The fourth strain gauge 2G2 is attached to the lower surface of the fourth thin portion TH4.

The electrical circuit EC1 converts a change in the resistance of the first strain gauge 1G1, the second strain gauge 2G1, the third strain gauge 1G2, and the fourth strain gauge 2G2 to a voltage. In the electrical circuit EC1, the first strain gauge 1G1, the second strain gauge 2G1, the third strain gauge 1G2, and the fourth strain gauge 2G2 are disposed in a bridge configuration. The electrical circuit EC1 includes the first temperature-sensitive resistor R1 and the second temperature-sensitive resistor R2 as shown in FIG. 5 in addition to the first strain gauge 1G1, the second strain gauge 2G1, the third strain gauge 1G2, and the fourth strain gauge 2G2. The electrical circuit EC1 also includes resistors R11, R12 for zero balance adjustment, resistors R21, R22 for zero point temperature compensation, resistors R31, R32 for output sensitivity adjustment, and a resistor R40 for input resistance adjustment.

The first temperature-sensitive resistor R1 and the second temperature-sensitive resistor R2 are temperature-sensitive resistors provided to accommodate changes in output (output OUT in FIG. 5) due to changes in the elastic modulus of the strain element 90a with temperature and changes in the gauge factor of the strain gauges 1G1, 2G1, 1G2, 2G2 with temperature. As shown in FIG. 5, the first temperature-sensitive resistor R1 and the second temperature-sensitive resistor R2 are inserted on an input IN side of the electrical circuit EC1 and perform temperature compensation.

It will be noted that the electrical circuit EC1 shown in FIG. 5 is an example of a known circuit and may be a circuit from which some resistors are removed. Furthermore, since the electrical circuit EC1 is a known circuit, description of its principle and detailed configuration will be omitted.

### (2-7-2) Arrangement of Strain Gauges and Temperature-sensitive Resistors in Load Cell

In the load cell 90, as mentioned above, the first strain gauge 1G1 is attached to the upper surface of the first thin portion TH1 of the strain element 90a, the second strain gauge 2G1 to the upper surface of the second thin portion TH2 of the strain element 90a, the third strain gauge 1G2 to the lower surface of the third thin portion TH3 of the strain element 90a, and the fourth strain gauge 2G2 to the lower surface of the fourth thin portion TH4 of the strain element 90a (see FIG. 6). The attachment is usually performed using an adhesive such as a thermosetting epoxy adhesive.

The first temperature-sensitive resistor R1 is secured to a second surface C1B, which is the lower surface of the first central portion C1 of the strain element 90a (see FIG. 6). The second surface C1B of the first central portion C1 is a surface on the opposite side of a first surface C1A of the first central portion C1 and is a parallel to the first surface C1A of the first central portion C1. The first surface C1A, which is the upper surface of the first central portion C1, opposes the lower surface (heat emitting surface HS) of the stepping motor 51. The gap between the first surface C1A of the first central portion C1 and the heat emitting surface HS of the stepping motor 51 is narrow, and there is no barrier between the first surface C1A of the first central portion C1 and the heat emitting surface HS of the stepping motor 51.

The second temperature-sensitive resistor R2 is secured to a fourth surface C2B, which is the upper surface of the second central portion C2 of the strain element 90a (see FIG. 6). The fourth surface C2B of the second central portion C2 is a surface on the opposite side of a third surface C2A of the second central portion C2 and is parallel to the third surface C2A of the second central portion C2. The third surface C2A, which is the lower surface of the second central portion C2, opposes the upper surface (heat emitting surface HS) of the stepping motor 41. The gap between the third surface C2A of the second central portion C2 and the heat emitting surface HS of the stepping motor 41 is narrow, and there is no shield between the third surface C2A of the second central portion C2 and the heat emitting surface HS of the stepping motor 41.

### (2-7-3) Unit having Pool Hopper, Weigh Hopper, and Load Cell

As shown in FIG. 4, the pool hopper 40, the weigh hopper 50, and the load cell 90 secured to the weigh hopper 50 are unitized to form an assembly. The combination weighing apparatus 10 has a plurality of the units each having the pool hopper 40, the weigh hopper 50, and the load cell 90. The plural units are mounted to the weighing mechanism frame 80 so as to be adjacent to each other in its circumferential direction.

### (2-8) Collection and Discharge Chute

The collection and discharge chute 60 is a part for discharging the product. After the combination weighing based on the weighing results of the load cells 90, the weighed product selected for the combination is fed from the weigh hoppers 50 to the collection and discharge chute 60. The collection and discharge chute 60 collects and discharges downward the product fed from the weigh hoppers 50. The product discharged from the collection and discharge chute 60 is delivered to a downstream apparatus such as a bagmaking and packaging machine disposed under the combination weighing apparatus 10.

The product discharged to the outside of the combination weighing apparatus 10 is, for example, fed from a discharge outlet 60a in the lower portion of the collection and discharge chute 60 to a bagmaking and packaging machine or the like (not shown in the drawings) installed under the collection and discharge chute 60.

### (2-9) Weighing Mechanism Frame

The weighing mechanism frame 80 is a frame formed in the shape of a cylinder (see FIG. 3).

The weighing mechanism frame 80 supports mainly the dispersion table 20, the radial feeders 30, the pool hoppers 40, and the weigh hoppers 50 (see FIG. 3). The weighing mechanism frame 80 supports the dispersion table 20 and the radial feeders 30 from below. The units having the pool hoppers 40 and the weigh hoppers 50 are mounted to the side surface of the weighing mechanism frame 80 (see FIG. 3). It will be noted that FIG. 3 illustrates a state in which, excepting one set, the radial feeders 30, the pool hoppers 40, and the weigh hoppers 50 have been detached from the combination weighing apparatus 10.

Inside the weighing mechanism frame 80 are housed various devices. Specifically, inside the weighing mechanism frame 80 are housed the electromagnet (not shown in the drawings) for vibrating the dispersion table 20, the electromagnets (not shown in the drawings) for vibrating the radial feeders 30, the stepping motors 41 that drive the PH gates 40a of the pool hoppers 40, the stepping motors 51 that drive the WH gates 50a of the weigh hoppers 50, and the load cells 90.

### (2-10) Support Legs and Body Frame

The support legs 81 are members that join together the weighing mechanism frame 80 and the body frame 100 (see FIG. 3). A total of four support legs 81 are provided. One support leg 81 extends from each of four support posts 110 of the body frame 100 toward the weighing mechanism frame 80.

The body frame 100 supports the weighing mechanism frame 80 via the support legs 81. Furthermore, the support legs 81 support the collection and discharge chute 60. The body frame 100 is disposed on a frame base (not shown in the drawings). Under the frame base is disposed an apparatus (not shown in the drawings) such as a bagmaking and packaging machine, and the product discharged from the discharge outlet 60a of the collection and discharge chute 60 is fed to that apparatus.

### (2-11) Control Unit

As shown in FIG. 2, the control unit 70 has a CPU 76 and a memory 77 such as a ROM and a RAM. The control unit 70 also has a multiplexer 71, an A/D converter 72, and a digital signal processor (DSP) 73.

The multiplexer 71 selects one weigh signal from the weigh signals of the load cells 90 and sends it to the A/D converter 72 in accordance with a command from the DSP 73. The A/D converter 72 converts the weigh signal (an analog signal) received from the multiplexer 71 into a digital signal in accordance with a timing signal sent from the DSP 73 and sends the digital signal to the DSP 73. The DSP 73 filters the digital signal sent from the A/D converter 72.

The control unit 70 is connected to each part of the combination weighing apparatus 10, such as the dispersion table 20, the radial feeders 30, the stepping motors 41, the stepping motors 51, and a touch panel 75. The control unit 70 controls each part of the combination weighing apparatus 10 as a result of the CPU 76 executing programs stored in the memory 77.

The control unit 70 specifically performs, for example, the following kind of control.

The control unit 70 performs the combination weighing operation based on the weigh values in the pool hoppers 50. Specifically, the control unit 70 uses the signals filtered by the DSP 73 to calculate the weight of the product retained in each of the weigh hoppers 50 and performs the combination weighing operation so that the weight total is within a predetermined target weight range and comes closest to a target value. Then, the control unit 70 determines a combination of the weigh hoppers 50 based on the results of the combination weighing operation and controls the operation of the stepping motors 51 to open the WH gates 50a of the weigh hoppers 50 that have been determined. Furthermore, when any of the weigh hoppers 50 is empty, the control unit 70 activates the stepping motor 41 to open the PH gate 40a of the pool hopper 40 disposed above that weigh hopper 50.

### (3) Characteristics

(3-1)
As described in patent document 1 (JP-A No. H11-125555), a load cell that incorporates a temperature-sensitive resistor for temperature correction into an electrical circuit is known. The elastic modulus of the strain element of the load cell changes with temperature, and the gauge factor of the strain gauge also changes with temperature, so the output of the load cell also changes with temperature. To accommodate these changes, using a temperature-sensitive resistor to perform temperature compensation is known.

However, a load cell incorporated into a combination weighing apparatus may be strongly affected not only by the temperature of the surrounding atmosphere but also radiant heat of heat generating objects disposed nearby. The effect of radiant heat of heat emitting portions has not been considered in the design of conventional combination weighing apparatus. The inventor of this application found that the effect of the temperature of the atmosphere surrounding the load cell and the effect of radiant heat of heat emitting portions are not necessarily proportional and that a large difference occurs between the two when the combination weighing apparatus transitions from a stopped state to an operating state (or from an operating state to a stopped state).

Specifically, the inventor of this application verified error in the output (measurement values) of the load cell by repeatedly measuring the surface temperature of each part of the load cell, the temperature of the temperature-sensitive resistor, and the temperature of the atmosphere surrounding the load cell before and after the state transition. As a result, the inventor recognized that the factor that most affects changes in the measurement values is the temperature difference between the temperature-sensitive resistor and the strain element and that the temperature-sensitive resistor is significantly affected by the heat generated by a motor (heat generating object) disposed nearby.

In the combination weighing apparatus 10 pertaining to this embodiment, which was invented based on such experiments and verification, the first temperature-sensitive resistor R1 of the load cell 90 is secured not to the first surface C1A that opposes the lower surface (heat emitting surface HS) of the stepping motor 51 but to the second surface C1B that does not oppose the heat emitting surface HS of the stepping motor 51. For this reason, in the combination weighing apparatus 10, the first temperature-sensitive resistor R1 is inhibited from being affected by the radiant heat of the heat emitting surface HS of the stepping motor 51. Specifically, divergence between the temperature of the first temperature-sensitive resistor R1 and the temperature of the first central portion C1 of the strain element 90a is inhibited. Because of this, the weighing results obtained by the load cell 90 are good, and the weighing accuracy of the combination weighing apparatus 10 can be ensured.

It will be noted that the action and effects of the combination weighing apparatus 10 described above are particularly useful when adopting a dustproof and waterproof structure that protects motors and printed circuit boards from product seasonings. This is because, in such a case, owing to the sealed structure, the load cell 90 is susceptible to heat from the heat emitting surfaces of the motors, and the risk for measurement errors is high. A proof test conducted in the combination weighing apparatus 10 showed that changes in the weigh values are reduced compared with a combination weighing apparatus using a conventional load cell. When the apparatus were normally operated for 1 hour and changes in weigh values were compared when the apparatus were stopped for 30 minutes, it was found that whereas in the conventional apparatus the changes in the weigh values were 0.3 g to 0.5 g, in the combination weighing apparatus 10 the changes in the weigh values were reduced to 0.1 g. Because of this, even when the apparatus is used in a manner in which it is repeatedly operated and stopped, a drop in the yield of the production line due to weighing defects can be inhibited.

(3-2)
In the combination weighing apparatus 10 pertaining to this embodiment, the first temperature-sensitive resistor R1 is secured to the second surface C1B, which is a surface on the opposite side of the first surface C1A that opposes the heat emitting surface HS of the stepping motor 51 and is parallel to the first surface C1A. For this reason, the first temperature-sensitive resistor R1 is hardly affected by the radiant heat from the heat emitting surface HS of the stepping motor 51.

(3-3)
In the combination weighing apparatus 10 pertaining to this embodiment, the second temperature-sensitive resistor R2 of the load cell 90 is secured not to the third surface C2A of the second central portion C2 that opposes the heat emitting surface HS of the stepping motor 41 but to the fourth surface C2B of the second central portion C2 that does not oppose the heat emitting surface HS of the stepping motor 41. For this reason, the second temperature-sensitive resistor R2 is inhibited from being affected by the radiant heat of the heat emitting surface HS of the stepping motor 41, the weighing results obtained by the load cell 90 are good, and the weighing accuracy of the combination weighing apparatus 10 can be ensured.

(3-4)
In the combination weighing apparatus 10 pertaining to this embodiment, the pool hopper 40 and the weigh hopper 50 are adjacent to each other in the up and down direction, and the load cell 90 is positioned between the stepping motor 41 and the stepping motor 51 that drive them (see FIG. 4). For this reason, if the first temperature-sensitive resistor R1 and the second temperature-sensitive resistor R2 were fixed to the strain element 90a of the load cell 90 in accordance with the conventional arrangement, the radiant heat of the heat emitting surfaces HS of the motors would end up adversely affecting the first temperature-sensitive resistor R1 and the second temperature-sensitive resistor R2.

However, as described above, in the combination weighing apparatus 10, the first temperature-sensitive resistor R1 is secured to the second surface C1B of the first central portion C1 that does not oppose the heat emitting surface HS, and the second temperature-sensitive resistor R2 is secured to the fourth surface C2B of the second central portion C2 that does not oppose the heat emitting surface HS. For this reason, the radiant heat of the heat emitting surfaces HS of the motors can be inhibited from reaching the first temperature-sensitive resistor R1 and the second temperature-sensitive resistor R2.

(3-5)
In the combination weighing apparatus 10 pertaining to this embodiment, the pool hopper 40, the weigh hopper 50, and the load cell 90 secured to the weigh hopper 50, which are adjacent to each other in the up and down direction, are unitized to form an assembly. Additionally, in the combination weighing apparatus 10, a plurality of the units are arranged adjacent to each other in the circumferential direction. Additionally, to downsize the combination weighing apparatus 10, the size of the units and the distance in the circumferential direction between the units are small.

For this reason, in the combination weighing apparatus 10, the stepping motor 41 and the stepping motor 51 need to be disposed near the load cell 90, and also as viewed from above, the stepping motor 41 and the stepping motor 51 and the load cell 90 overlap each other as shown in FIG. 7. Furthermore, there is no shield to shield radiant heat between the stepping motor 41 and the load cell 90 or between the stepping motor 51 and the load cell 90.

In this way, in the combination weighing apparatus 10 in which the load cell 90 is easily affected by the radiant heat of the heat emitting surfaces HS of the stepping motor 41 and the stepping motor 51, the arrangement of the first temperature-sensitive resistor R1 and the second temperature-sensitive resistor R2 is adjusted as described above, whereby the radiant heat of the heat emitting surfaces HS is inhibited from excessively heating the first temperature-sensitive resistor R1 and the second temperature-sensitive resistor R2.

### (4) Example Modifications

Example modifications of the above embodiment will now be described below. The following example modifications may be combined with other example modifications to the extent that they are not mutually contradictory.

### (4-1) Example Modification A

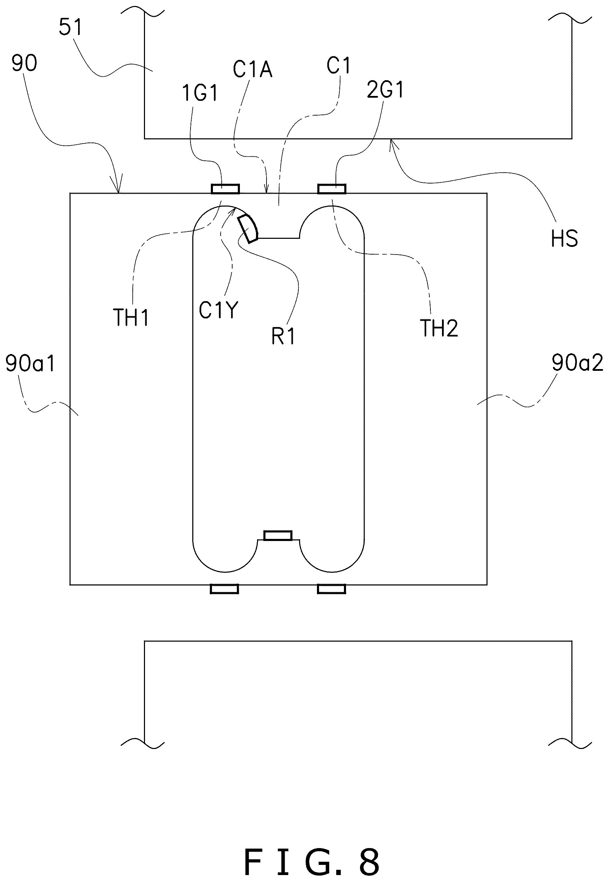

In the combination weighing apparatus 10 pertaining to the above embodiment, the first temperature-sensitive resistor R1 is secured to the second surface C1B, which a surface on the opposite side of the first surface C1A that opposes the heat emitting surface HS of the stepping motor 51 and is parallel to the first surface C1A. However, the first temperature-sensitive resistor R1 may be secured to a curved surface C1Y shown in FIG. 8. The curved surface C1Y is an inner surface of the first central portion C1 of the strain element 90a and is a surface on the opposite side of the first surface C1A that opposes the heat emitting surface HS of the stepping motor 51. The curved surface C1Y is a surface that is not parallel to the first surface C1A. Even when the first temperature-sensitive resistor R1 is secured to the curved surface C1Y, the radiant heat from the heat emitting surface HS of the stepping motor 51 hardly ends up heating the first temperature-sensitive resistor R1 from the outside, and the weighing accuracy of the combination weighing apparatus 10 can be ensured.

### (4-2) Example Modification B

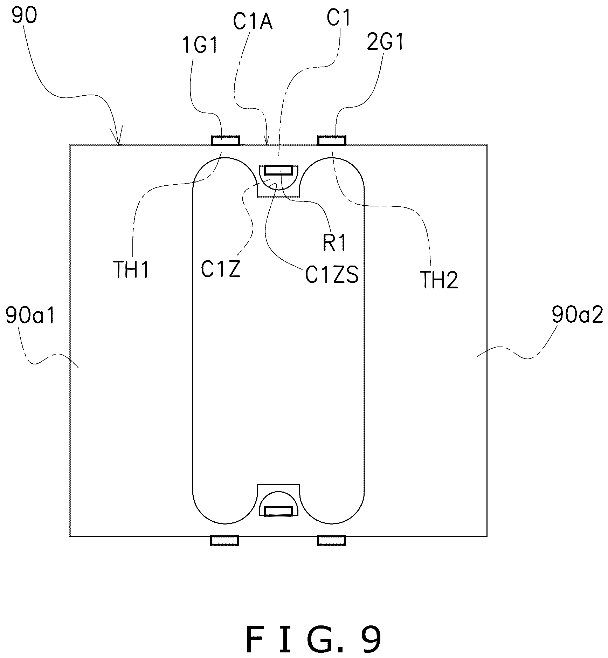

In the combination weighing apparatus 10 pertaining to the above embodiment, the first temperature-sensitive resistor R1 is secured to the second surface C1B that is a surface on the opposite side of the first surface C1A that opposes the heat emitting surface HS of the stepping motor 51. However, the first temperature-sensitive resistor R1 may be secured to an inner surface C1ZS of a hole C1Z shown in FIG. 9. The hole C1Z is a hole that extends from the near side to the far side of the page in FIG. 9 and penetrates the first central portion C1 of the strain element 90a. No matter where the first temperature-sensitive resistor R1 is secured in the hole C1Z, the radiant heat from the heat emitting surface HS of the stepping motor 51 hardly reaches it. The inner surface C1ZS of the hole C1Z may be a surface on the opposite side of the first surface C1A that opposes the heat emitting surface HS of the stepping motor 51 or may be the lower surface of the hole C1Z. Furthermore, the hole C1Z may be a hole that does not penetrate the strain element 90a, or a hole small enough to just be able to insert the first temperature-sensitive resistor R1 into it, or a hole or groove formed by cutting out part of the strain element 90a.

### (4-3) Example Modification C

In the combination weighing apparatus 10 pertaining to the above embodiment, the pool hoppers 40 are provided above the weigh hoppers 50, but the pool hoppers 40 can also be omitted. In this case, the stepping motors 51 that drive the weigh hoppers 50 and the strain elements 90a of the load cells 90 are disposed adjacent to each other in the up and down direction.

Furthermore, in the combination weighing apparatus 10 pertaining to the above embodiment, the stepping motors 41 that drive the pool hoppers 40 are positioned under the load cells 90, and the stepping motors 51 that drive the weigh hoppers 50 are positioned above the load cells 90, but the configurations of the link mechanisms and cam mechanisms can also be changed to reverse the arrangement of the stepping motors 41 and the stepping motors 51.

### (4-4) Example Modification D

In the combination weighing apparatus 10 pertaining to the above embodiment, there are no hoppers under the weigh hoppers 50, but known booster hoppers may be provided under the weigh hoppers 50. In this case also, applying the present invention is preferred to ensure that radiant heat from heat emitting surfaces of motors that drive the booster hoppers do not exert a significant effect on the temperature-sensitive resistors of the load cells.

### REFERENCE SIGNS LIST

- 10: Combination Weighing Apparatus
- 40: Pool Hopper (Second Hopper)
- 40a: PH Gate (Discharge Unit)
- 41: Stepping Motor (Second Drive Unit)
- 50: Weigh Hopper (First Hopper)
- 50a: WH Gate (Discharge Unit)
- 51: Stepping Motor (First Drive Unit)
- 90: Load Cell
- 90a: Strain Element
- 90a1: First End Portion
- 90a2: Second End Portion
- TH1: First Thin Portion
- TH2: Second Thin Portion
- C1: First Central Portion
- C1A: First Surface of First Central Portion
- C1B: Second Surface of First Central Portion
- TH3: Third Thin Portion
- TH4: Fourth Thin Portion
- C2: Second Central Portion
- C2A: Third Surface of Second Central Portion
- C2B: Fourth Surface of Second Central Portion
- 1G1: First Strain Gauge
- 2G1: Second Strain Gauge
- 1G2: Third Strain Gauge
- 2G2: Fourth Strain Gauge
- R1: First Temperature-sensitive Resistor
- R2: Second Temperature-sensitive Resistor
- EC1: Electrical Circuit
- HS: Heat Emitting surface (First Heat Emitting Portion, Second Heat Emitting Portion)
- C1Z: Hole formed in First Central Portion

### CITATION LIST

### PATENT LITERATURE

Patent Document 1: JP-A No. H11-125555

## Claims

1. A combination weighing apparatus comprising:
a plurality of hoppers including a first hopper that discharges product retained therein, each of the plural hoppers having a discharge unit;
a first drive unit that has a first heat emitting portion and drives the discharge unit; and
a load cell that is secured to the first hopper and is for weighing the product retained in the first hopper,
the load cell having
a strain element having a first end portion secured to the first hopper, a second end portion that is an end portion on the opposite side of the first end portion, a first thin portion and a second thin portion disposed between the first end portion and the second end portion, and a first central portion disposed between the first thin portion and the second thin portion,
a first strain gauge attached to the first thin portion,
a second strain gauge attached to the second thin portion, and
an electrical circuit that includes a first temperature-sensitive resistor and converts a change in the resistance of the first strain gauge and the second strain gauge to a voltage,
the first central portion has a first surface that opposes the first heat emitting portion of the first drive unit and a second surface that does not oppose the first heat emitting portion of the first drive unit, and
the first temperature-sensitive resistor is secured to the second surface of the first central portion.

2. The combination weighing apparatus of claim 1, wherein the second surface of the first central portion is a surface on the opposite side of the first surface of the first central portion and is parallel to the first surface of the first central portion.

3. The combination weighing apparatus of claim 1, wherein the second surface of the first central portion is a surface on the opposite side of the first surface of the first central portion and is not parallel to the first surface of the first central portion.

4. The combination weighing apparatus of claim 1, wherein the second surface of the first central portion is an inner surface of a hole formed in the first central portion or one surface of a cutout formed in the first central portion.

5. The combination weighing apparatus of any one of the preceding claims, further comprising a second drive unit that has a second heat emitting portion and drives the discharge unit different from the discharge unit driven by the first drive unit,
wherein
the strain element further has a third thin portion and a fourth thin portion disposed between the first end portion and the second end portion and a second central portion disposed between the third thin portion and the fourth thin portion,
the load cell further has a third strain gauge attached to the third thin portion and a fourth strain gauge attached to the fourth thin portion,
the electrical circuit further includes a second temperature-sensitive resistor, and the first strain gauge, the second strain gauge, the third strain gauge, and the fourth strain gauge are disposed in a bridge configuration,
the second central portion has a third surface that opposes the second heat emitting portion of the second drive unit and a fourth surface that does not oppose the second heat emitting portion of the second drive unit, and
the second temperature-sensitive resistor is secured to the fourth surface of the second central portion.

6. The combination weighing apparatus of claim 5, wherein
the plurality of hoppers further include a second hopper positioned above or under the first hopper,
the first drive unit drives the discharge unit of the first hopper,
the second drive unit drives the discharge unit of the second hopper, and
the load cell is disposed in a height position between the first drive unit and the second drive unit.

7. The combination weighing apparatus of any of claims 1 to 6, wherein
the first drive unit and the load cell overlap each other as viewed from above,
the first drive unit, the load cell, and the first hopper form an assembly, and
a plurality of the assemblies are adjacent to each other in a circumferential direction.

8. The combination weighing apparatus of any of claims 1 to 7, wherein the first central portion of the strain element overlaps the first heat emitting portion of the first drive unit as viewed from above.

9. The combination weighing apparatus of any of claims 1 to 8, wherein the first surface of the first central portion of the strain element opposes the first heat emitting portion of the first drive unit without an intervening shield.
